Europäisches Patentamt

European Patent Office

Office européen des brevets

(19)

(11) EP 0 709 692 B1

(12) **FASCICULE DE BREVET EUROPEEN**

(45) Date de publication et mention
de la délivrance du brevet:
**10.05.2000 Bulletin 2000/19**

(51) Int Cl.[7]: **G01S 3/784**, G01S 3/786

(21) Numéro de dépôt: **95420293.3**

(22) Date de dépôt: **25.10.1995**

(54) **Capteur optoélectronique pour mesurer l'intensité et la direction d'incidence d'un faisceau lumineux**

Optoelektronischer Sensor zur Messung der Intensität und der Einfallsrichtung eines Lichtstrahls

Optoelectronic sensor for measuring the intensity and the direction of incidence of a light beam

(84) Etats contractants désignés:
**CH DE GB IT LI**

(30) Priorité: **25.10.1994 FR 9413046**

(43) Date de publication de la demande:
**01.05.1996 Bulletin 1996/18**

(73) Titulaire: **CSEM,
Centre Suisse d'Electronique et de
Microtechnique S.A.
2007 Neuchâtel (CH)**

(72) Inventeurs:
• **Venier, Philippe**
**CH-2540 Grenchen (CH)**
• **Debergh, Patrick**
**CH-2088 Cressier (CH)**
• **Arreguit, Xavier**
**CH-1052 Le Mont/Lausanne (CH)**

(74) Mandataire: **Thibault, Jean-Marc
Cabinet Beau de Loménie
51, Avenue Jean Jaurès
B.P. 7073
69301 Lyon Cédex 07 (FR)**

(56) Documents cités:
EP-A- 0 135 065        EP-A- 0 326 090
EP-A- 0 384 527        WO-A-86/05056
FR-A- 1 561 437        US-A- 3 727 057
US-A- 4 018 532        US-A- 4 367 403

**Description**

La présente invention concerne le domaine technique des capteurs permettant la traduction en signaux électriques de l'information portée par un faisceau lumineux incident.

L'objet de l'invention vise, plus précisément, les capteurs optoélectroniques conçus pour mesurer l'intensité et la direction d'incidence d'un faisceau de lumière, collimaté ou non, provenant d'une source de nature quelconque.

Un tel capteur est connue du document EP-A-0 135 065.

La présente invention trouve une application particulièrement avantageuse dans le domaine de la mesure du flux lumineux émis par le soleil, de manière à donner une information à des systèmes, par exemple, de climatisation ou de régulation de température, de commande de volets ou de domotique au sens général.

Dans le domaine technique préféré ci-dessus, il est apparu nécessaire de déterminer l'intensité du flux solaire, ainsi que sa direction d'incidence, de façon à constituer une source d'informations qui peuvent être exploitées par divers systèmes de traitement adaptés à chacune des applications envisagées. Par détermination de la direction d'incidence du faisceau solaire, il doit être compris la mesure de son angle d'azimut et de sa hauteur angulaire ou de son angle de site. La conception d'un tel capteur optoélectronique doit donc être telle qu'il puisse autoriser la mesure de la direction d'incidence du flux solaire, aussi bien lorsque le soleil se trouve situé à son zénith que proche de l'horizon. Par ailleurs, ce capteur doit être conçu pour conserver ses qualités de mesure, même en étant placé dans un environnement soumis à des contraintes telles que de température, d'humidité ou de vibrations.

L'objet de l'invention vise donc à proposer un capteur optoélectronique capable de déterminer la direction d'incidence et l'intensité d'un flux lumineux, notamment d'origine solaire, cette mesure étant réalisée sur une large plage de variation de la direction d'incidence du flux lumineux.

L'objet de l'invention vise également à offrir un capteur conçu pour assurer son utilisation dans des conditions contraignantes, notamment d'humidité, de température ou de chocs, tout en présentant un faible encombrement et une conception limitant son coût de fabrication et autorisant une fabrication en grande série.

Pour atteindre les objectifs ci-dessus, le capteur optoélectronique selon l'invention comporte :

- une matrice de pixels comportant chacun une cellule photosensible et agencés sensiblement selon un plan pour constituer une rétine artificielle,
- un système optique conçu pour former un spot lumineux sur la matrice de pixels,
- et un dispositif de traitement des signaux délivrés par les pixels sous l'effet du faisceau lumineux et comportant :

- . des moyens pour déterminer le centre géométrique du spot lumineux sur la matrice, dont la position est fonction de la direction d'incidence du faisceau lumineux,
- . et des moyens pour déterminer l'intensité du faisceau lumineux.

Selon l'invention, les moyens pour déterminer le centre géométrique du spot lumineux sont constitués :

- par l'intermédiaire d'un double réseau de connexion des pixels de la matrice, selon sensiblement des cercles concentriques et des rayons, les coordonnées du spot lumineux sur la matrice donnant une image de l'angle d'azimut et de l'angle de site du faisceau lumineux incident,
- et par des circuits associés aux deux réseaux de connexion de pixels, de façon à calculer respectivement les coordonnées en azimut et en site du faisceau lumineux incident.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en coupe transversale schématique montrant le principe de fonctionnement du capteur optoélectronique conforme à l'invention.

La **fig. 2** est une vue schématique en plan, prise sensiblement selon les lignes II-II de la **fig. 1**.

La **fig. 3** est une vue générale de l'organisation des cellules constitutives de la rétine artificielle.

La **fig. 4** est une vue, à plus grande échelle, d'un détail de la **fig. 3** et illustrant la connexion des cellules.

La **fig. 5** est un schéma-bloc fonctionnel illustrant une caractéristique du capteur selon l'invention.

La **fig. 6** est une vue d'un détail faisant partie du capteur selon l'invention.

La **fig. 7** est un diagramme montrant le facteur de transmission **T** en fonction de la hauteur angulaire $\underline{h}$ du flux lumineux incident.

La **fig. 8** est une vue en coupe d'un exemple de réalisation d'un capteur optoélectrique conforme à l'invention.

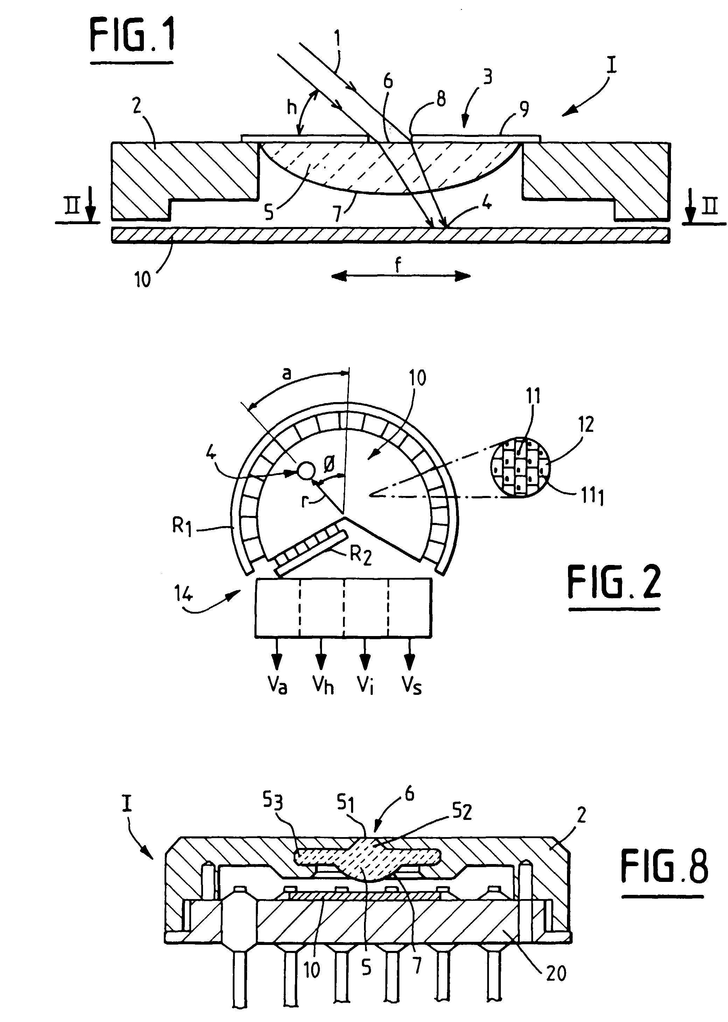

Tel que cela apparaît plus précisément aux **fig. 1** et **2**, le capteur **I** selon l'invention est apte à mesurer l'intensité et la direction d'incidence d'un faisceau lumineux **1** provenant d'une source constituant le soleil dans un exemple préféré de réalisation. Le capteur **I** est conçu pour mesurer l'intensité et la direction d'incidence du faisceau lumineux **1**, à savoir sa hauteur ou son angle de site $\underline{h}$ et l'angle d'azimut a considéré sur la **fig. 1**, dans le plan perpendiculaire à la feuille.

Le capteur **I** selon l'invention comporte un corps **2** et un système optique **3** conçu pour réduire l'ouverture angulaire, de façon à former un spot lumineux **4** à partir du faisceau lumineux incident **1**, et ce, quelle que soit la direction du faisceau incident. Dans l'exemple de réalisation décrit ci-après, le système optique **3** est constitué d'une lentille **5** présentant une face d'entrée **6** pour le faisceau **1** et une face de sortie **7** aménagée, selon l'invention, sous la forme d'une calotte sphérique. Dans l'exemple illustré, la lentille **5** est réalisée sous la forme d'une demi-sphère. Le système optique **3** comporte, également, un diaphragme **8** ménagé dans un écran opaque **9** conçu pour limiter le contour du faisceau lumineux **1** entrant par la face d'entrée **6** de la lentille **5**. Le diaphragme **8** présente, de préférence, une section circulaire.

Selon une autre caractéristique de l'invention, la lentille **5** est placée de façon que la calotte sphérique **7** soit tournée vers une matrice **10** de photodiodes ou de cellules photosensibles **11** situées chacune à l'intérieur d'un pixel **12**. Il doit être compris que chaque pixel **12** comprend une cellule **11** et une électronique **11₁** localisée autour de la cellule. La matrice **10** constitue ainsi une rétine artificielle composée de pixels **12** formant ensemble une surface s'étendant dans un plan. Selon une caractéristique de l'invention, le vertex de la calotte sphérique **7** est situé à une distance déterminée de la matrice **10**, de façon que la matrice **10** se trouve placée entre la lentille **5** et son plan focal **f** schématisé sur la **fig. 1**. La distance entre la lentille **5** et la matrice **10**, ainsi que l'ouverture du diaphragme **8** permettent de fixer le diamètre du spot lumineux **4** apparaissant sur la matrice **10**. Il doit être considéré que le spot **4**, formé sur la matrice, doit présenter une largeur limitée pour ne pas affecter la résolution de la mesure, mais suffisante pour recouvrir plusieurs pixels, afin d'autoriser la détermination de la position du spot sur le réseau. Par conséquent, le spot **4** est défocalisé de sorte qu'il n'y a pas de formation d'image. Ainsi, le spot lumineux **4** conserve un diamètre pratiquement constant pour toutes les hauteurs angulaires du soleil comprises entre 90°, correspondant à la position du soleil à son zénith et 5°, correspondant à la position du soleil à l'horizon. Le système optique **3** réduit ainsi l'ouverture angulaire de la hauteur, d'une plage de valeurs de 0 à 90° en entrée, à une plage de valeurs de 0° à 45° en sortie. A titre d'exemple, le diamètre du spot lumineux **4** sur la rétine artificielle **10** présente un diamètre de l'ordre de 0,4 mm pour :

- un diamètre du diaphragme **8** égal à 0,48 mm,
- une lentille **5** avec un indice de réfraction égal à 1,5 et dont le rayon de la demi-sphère est égal à 1,6 mm,
- et une distance de la matrice **10** avec le vertex de la lentille égale à 0,4 mm.

Le système optique **3** permet donc de concentrer le flux incident solaire **1**, en un spot lumineux **4** défocalisé dont la position sur la matrice **10** varie linéairement avec la hauteur angulaire du soleil. Dans l'exemple décrit ci-dessus, le système optique **3** comprend une lentille présentant une calotte sphérique et un diagramme limitant l'ouverture d'entrée de la lentille. Bien entendu, il peut être envisagé une autre variante de réalisation du système optique formé, par exemple, par une lentille diffractive adaptée pour réduire l'ouverture angulaire, de manière à obtenir la formation d'un spot lumineux sur la matrice **10**, quelle que soit la direction du faisceau incident.

Les pixels **12** de la matrice **10** sont reliés à un dispositif **14** de récupération et de traitement des signaux électriques délivrés par les pixels **12** sous l'effet d'un flux lumineux. Le dispositif **14** est adapté pour déterminer la position du centre géométrique du spot **4** sur la rétine **10**. Le centre géométrique du spot lumineux **4** est déterminé en coordonnées polaires, c'est-à-dire sous la forme d'une distance $\underline{r}$ et d'un angle $\Phi$ (**fig. 2**), de sorte que les deux coordonnées polaires $\underline{r}$ et $\Phi$ correspondent directement à la direction du flux solaire. En effet, la coordonnée radiale $\underline{r}$ de la position du spot est pratiquement proportionnelle à la hauteur angulaire $\underline{h}$ du faisceau **1**, tandis que la coordonnée angulaire $\Phi$ correspond directement à l'angle d'azimut $\underline{a}$.

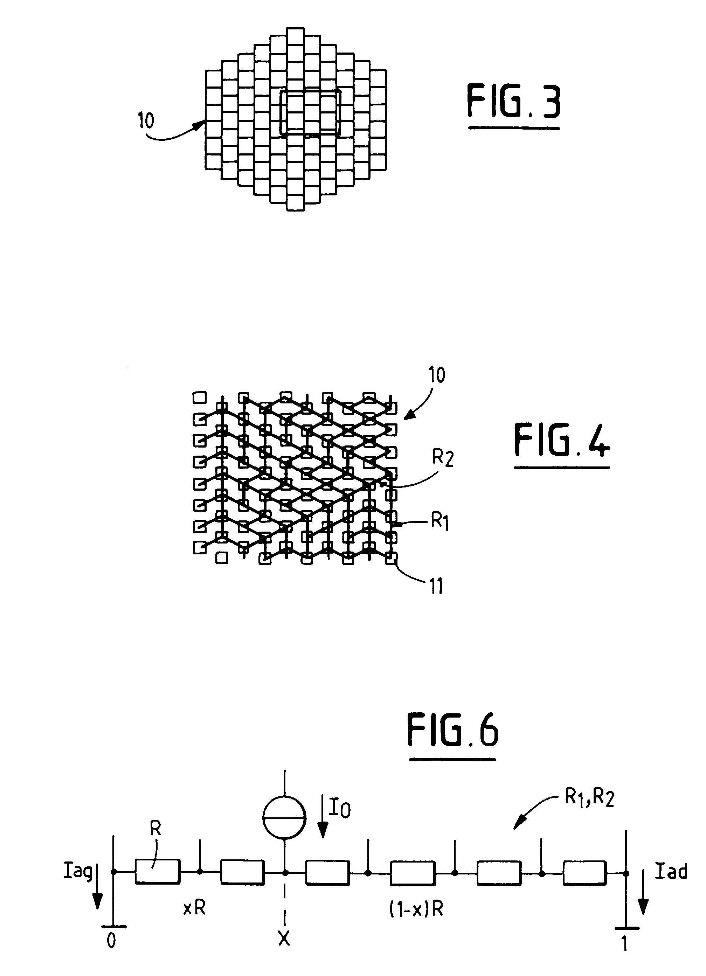

Selon une caractéristique avantageuse de l'invention, le dispositif **14** est adapté pour attribuer, à chaque cellule **11** de la rétine **10**, une position logique exprimée en coordonnées polaires, de façon à obtenir directement des signaux électriques proportionnels aux coordonnées polaires du spot, et donc à la direction du flux incident **1**. Tel que cela ressort plus précisément des **fig. 3** et **4**, la matrice **10** comporte des pixels **12** placés suivant une trame hexagonale compacte, compatible avec un remplissage complet de la surface. Les pixels **12** sont ainsi connectés suivant approximativement les lignes de coordonnées d'un repère polaire. Le dispositif **14** comporte ainsi un double réseau de connexion des pixels **12** permettant d'approximer un repère polaire. Il est ainsi prévu un premier réseau **R₁** de connexion des pixels **12** entre-eux, réalisé sensiblement selon des cercles concentriques approximés plus précisément par des hexagones concentriques en raison de la position d'implantation des pixels **12**. Les cercles ainsi formés dans le réseau **R₁** constituent des lignes de coordonnées à rayon constant. Il est prévu, également, un second réseau **R₂** de connexion des pixels **12** entre-eux, réalisé en raison de l'implantation des cellules, sous la forme de rayons approximés par des lignes brisées de coordonnées à argument constant. Il est à noter qu'il pourrait être envisagé de déterminer la direction du flux lumineux à partir de coordonnées cartésiennes converties en coordonnées polaires.

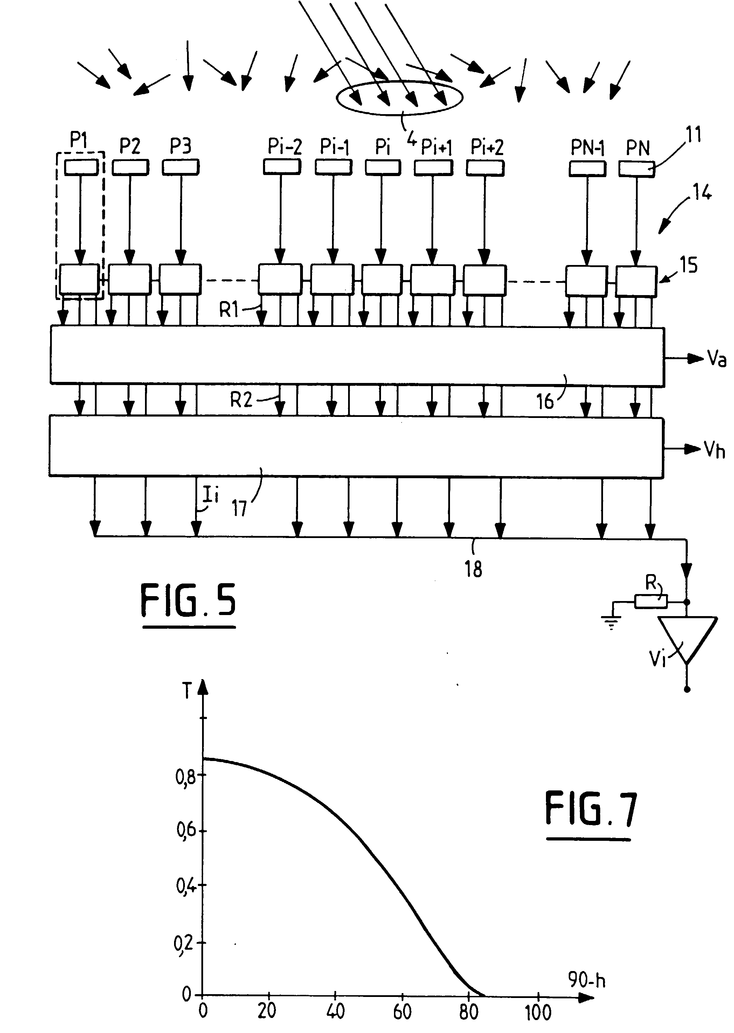

Il apparaît ainsi que chaque pixel **12** est relié à une ligne de chacun des réseaux **R₁, R₂**, l'une définissant sa position radiale et l'autre sa position angulaire. L'activation d'un pixel **12** par un flux lumineux conduit à l'émission simultanée d'un courant sur chacune des deux lignes correspondantes des réseaux $R_1$, $R_2$. A cet effet, le photocourant issu de chacune des cellules **11**, constituées par des photodiodes, est traité par des moyens **15** de mise en forme du signal (**fig. 5**). Les moyens de mise en forme **15** sont conçus, pour une valeur donnée du photocourant, à générer un courant $I_0$ de valeur constante sur chacun des réseaux $R_1$, $R_2$ (**fig. 6**). Vue de l'extérieur de la rétine **10**, la prise en compte des coordonnées de la ligne radiale et de la ligne angulaire, sur lesquelles un courant est injecté, permet d'indiquer la position de la cellule éclairée directement en coordonnées polaires. Cependant, il est à noter que le spot **4**, dû au faisceau lumineux **1**, couvre plusieurs cellules **11**. Les réseaux $R_1$, $R_2$ sont donc connectés à des circuits **16, 17** adaptés pour déterminer le centre géométrique ou de gravité de l'ensemble des cellules **11** éclairées par le spot **4**.

La détermination de la position du spot lumineux et de son centre de gravité a été décrite, par exemple, dans les articles de D. STANDLEY "An object position and orientation IC with embedded imager", IEEE Journal of Solid-State Circuits, vol. 26, No. 12, Decembre 1991 et de M. TARTAGNI et P. PERONA "Computing centroids in current-mode technique", Electronics Letters, vol. 29, No. 21, Octobre 1993. A titre illustratif, les extrémités des lignes radiales $R_2$ et circulaires $R_1$, déterminant le repère polaire, sont connectées à deux chaines de résistances **R**. Chaque noeud de la chaîne de résistance correspond à une valeur discrète donnée de la coordonée correspondante. Chaque pixel **12** actif injecte un courant unitaire $I_0$ sur le noeud situé à la position **xi**, correspondant à la localisation de la cellule. La position **xi** est comprise, dans l'exemple illustré, entre les valeurs 0 et 1, correspondant aux extrémités de chaque réseau $R_1$, $R_2$. Dans le cas où N pixels sont actifs, les courants disponibles aux extrémités sont donnés par les expressions suivantes :

$$I_{ag} = \sum_{i}^{N} (1-xi).I_0$$

pour le réseau $R_1$ et

$$I_{ad} = \sum_{i}^{N} xi.I_0$$

$$Ih_0 = \sum_{1}^{N} (1-xi)J_0$$

$$Ih_{90} = \sum_{1}^{N} xi.I_0$$

pour le réseau $R_2$.

Il est à considérer que les termes **xi** peuvent être interprétés comme les positions de **N** éléments de masse $I_0$. Le centre de gravité de ces éléments est obtenu en divisant les expressions ci-dessus par la somme des masses, c'est-à-dire par un facteur égal à $NI_0$. Dans la mesure où le nombre **N** de pixels actifs n'est pas constant, la division est effectuée à l'aide de diviseurs de courants. Les circuits **16, 17** délivrent ainsi, chacun, un signal unique **Va, Vh** permettant de donner une représentation explicite du centre de gravité.

Selon une caractéristique avantageuse de l'invention, chaque pixel **12** délivre un photocourant amplifié par un facteur de correction proportionnel à la valeur des pertes par réflexion apparaissant sur la surface optique de la lentille et dont la valeur dépend de la position du pixel dans la matrice. Ainsi, tel que cela apparaît à la **fig. 7**, les pertes optiques Fresnel dépendent fortement de l'angle d'incidence du faisceau et sont importantes pour des hauteurs angulaires **h** faibles. Pour réaliser cette correction, on a adapté la surface active de la cellule, ainsi que la valeur de l'amplification du signal délivré par la cellule. Ainsi, sur le bord du réseau de détecteurs (soleil bas), l'amplification sera plus élevée qu'au centre (soleil au zénith). En pratique, les moyens de mise en forme **15** amplifient les photocourants délivrés par les pixels **12**, en faisant varier le rapport des miroirs de courant utilisés pour dupliquer les photocourants. Les moyens de mise en forme **15** délivrent ainsi, pour chaque pixel **12**, un courant **Ii** qui reflète correctement l'intensité du signal lumineux, dans la mesure où le facteur d'amplification est choisi comme étant dépendant de l'atténuation optique théorique due aux pertes Fresnel, ainsi que des valeurs des facteurs d'amplification des pixels **12** avoisinants appartenant au spot lumineux **4**. La mesure de l'intensité du spot lumineux est donc indépendante de l'angle d'incidence du faisceau lumineux. Il est à noter que les courants amplifiés et corrigés **Ii** sont injectés sur un noeud global, de manière que leur sommation puisse permettre d'obtenir un signal **Vi** de détermination de l'intensité du spot lumineux **4**.

Selon une autre caractéristique avantageuse de l'invention, le dispositif **14** comporte des moyens permettant d'annuler les effets de la lumière parasite réfléchie. En effet, il apparaît qu'une partie du spot incident **4** se trouve, en partie, réfléchie, perturbant le calcul de son centre géométrique. Toutefois, il doit être considéré que les cellules directement éclairées par le spot lumineux, c'est-à-dire sans réflexion parasite, reçoivent une intensité lumineuse fortement supérieure aux autres cellules. Pour annuler les effets des réflexions parasites, le dispositif de traitement **14** comporte des moyens de définition d'un seuil variable pour les signaux délivrés par les cellules **11**, de façon que le nombre de pixels délivrant un signal atteignant cette valeur de seuil reste toujours constant. Le seuil s'adapte donc en permanence pour garantir que le nombre de pixels pris en compte, lors du calcul de la position du centre géométrique, soit constant et toujours inférieur au nombre de pixels effectivement éclairées par le spot incident.

Selon une autre caractéristique de l'invention, le dispositif de traitement **14** comporte des moyens permettant de distinguer la présence d'un spot obtenu à partir de la source lumineuse localisée, d'un éclairement diffus. En effet, dans le cas où la source lumineuse est le soleil, les signaux de sortie du capteur peuvent prendre des valeurs quelconques quand le soleil n'est pas réellement visible, en raison d'un ciel couvert ou sombre, ou d'un obstacle. Dans un exemple de réalisation, la détection de la présence d'un spot lumineux **4** est effectuée en comparant l'intensité du signal lumineux **Vi** à un seuil donné réglable. Dans la mesure où les rayons directs du soleil sont nettement plus intenses que la plupart des autres sources rencontrées, le soleil est considéré comme présent si l'intensité mesurée est supérieure à la valeur de seuil choisie.

La **fig. 8** illustre une variante de réalisation préférée du capteur **I** selon l'invention, réalisée sous la forme d'un boîtier compact et étanche. Le capteur **I** comporte un corps **2** formant un couvercle opaque destiné également à servir de support à la lentille optique **5**. Selon une caractéristique avantageuse, la lentille **5** présente une face d'entrée **6** qui est constituée par la petite base **5₁** d'un tronc de cône **5₂** dont la grande base est raccordée à une partie médiane **5₃** de la lentille, formant une extension radiale par rapport à la calotte sphérique **7**. La lentille **5** est destinée à être montée à l'intérieur du support opaque **2**, de manière que la petite base **5₁** du cône **5₂** vienne affleurer la face supérieure du support **2**. Une telle disposition offre l'avantage d'éviter l'apparition d'un effet d'ombre au niveau de la face d'entrée de la lentille, cet effet d'ombre étant susceptible de se produire pour des élévations solaires faibles. Pour améliorer la transmission, il peut être prévu d'appliquer une couche anti-reflets sur la face d'entrée **6** de la lentille.

Selon une variante de réalisation, la lentille **5** est montée directement dans le support **2** par l'intermédiaire de son extension radiale **5₃** venant s'encliqueter dans un logement complémentaire ménagé dans le support **2**. Selon une autre variante de réalisation, le support opaque **2** est réalisé en matière plastique injectée, dans laquelle la lentille **5** est réalisée, ensuite, par injection. Cette variante de réalisation évite le montage de la lentille à l'intérieur de son support et réduit les erreurs d'alignement de la lentille par rapport à la rétine **10**.

Il est à noter que la face intérieure du support **2** peut être adaptée ou traitée pour assumer une fonction d'anti-reflets, de façon à réduire les réflexions parasites. Le support **2** est fixé par tous moyens appropriés, étanches ou non, sur un boîtier **20** à l'intérieur duquel est fixé, par exemple par collage, la rétine artificielle **10**.

L'invention n'est pas limitée aux exemples décrits et représentés, car diverses modifications peuvent y être apportées sans sortir de son cadre.

## Revendications

1. Capteur optoélectronique pour mesurer l'intensité et la direction d'incidence d'un faisceau lumineux (**1**), du type comportant :

   - une matrice (**10**) de pixels (**12**) comportant chacun une cellule photosensible (**11**) et agencés sensiblement selon un plan pour constituer une rétine artificielle,
   - un système optique (**3**) conçu pour former un spot lumineux (**4**) sur la matrice de pixels (**10**),
   - et un dispositif (**14**) de traitement des signaux délivrés par les pixels sous l'effet du faisceau lumineux et comportant :

     . des moyens pour déterminer le centre géométrique du spot lumineux (**4**) sur la matrice (**10**), dont la position est fonction de la direction d'incidence du faisceau lumineux,
     . et des moyens pour déterminer l'intensité du faisceau lumineux,

   caractérisé en ce que les moyens pour déterminer le centre géométrique du spot lumineux sont constitués :

   - par l'intermédiaire d'un double réseau (**R₁, R₂**) de connexion des pixels (**12**) de la matrice (**10**), selon sensiblement des cercles concentriques et des rayons, les coordonnées du spot lumineux sur la matrice (**10**) donnant une image de l'angle d'azimut (**a**) et de l'angle de site (**h**) du faisceau lumineux incident,
   - et par des circuits (**16, 17**) associés aux deux réseaux de connexion de pixels (**12**), de façon à calculer respectivement les coordonnées en azimut et en site du faisceau lumineux incident.

2. Capteur selon la revendication 1, caractérisé en ce que chaque cellule photosensible (**11**) est associée à un facteur de correction dépendant de la valeur des pertes par réflexion apparaissant sur la surface optique de la lentille (**5**) et dont la valeur dépend de la position de la cellule dans la matrice, ainsi que des valeurs des facteurs de correction des cellules avoisinantes appartenant au spot lumineux (**4**).

3. Capteur selon la revendication 1, caractérisé en ce que le dispositif (**14**) comporte des moyens de définition d'un seuil variable pour les signaux, de façon que le nombre de cellules délivrant un signal atteignant cette valeur de seuil reste constant.

4. Capteur selon la revendication 1, caractérisé en ce que le dispositif de traitement (**14**) comporte des moyens permettant de distinguer la présence d'un spot lumineux (**4**) obtenu, à partir de la source lumineuse, d'un éclairement diffus.

5. Capteur selon la revendication 2, caractérisé en ce que les facteurs de correction sont constitués par une adaptation de la surface active de la cellule et/ou par une opération de pondération du courant délivré par la cellule.

6. Capteur selon la revendication 1, caractérisé en ce que le système optique (**3**) est composé :

   - d'une lentille (**5**) présentant une calotte sphérique (**7**) tournée vers et située à distance de la matrice (**10**), de façon que la matrice se trouve placée entre la lentille et son plan focal,
   - et d'un diaphragme (**8**) limitant l'ouverture d'entrée de la lentille à travers laquelle passe le faisceau lumineux incident (**1**).

7. Capteur selon la revendication 6, caractérisé en ce que le diaphragme (**8**) est réalisé par l'intermédiaire d'un trou ménagé dans un support opaque (**2**) et occupé par la petite base (**5₁**) d'un tronc de cône (**5₂**) aménagé sur la face opposée de celle portant la calotte sphérique (**7**), la petite base (**5₁**) du tronc du cône formant la face d'entrée (**6**) de la lentille.

8. Capteur selon la revendication **7**, caractérisé en ce que la lentille (**5**) comporte, entre le tronc de cône (**5₂**) et la calotte sphérique (**7**), une partie médiane (**5₃**) saillante de liaison avec le support opaque (**2**).

9. Capteur selon la revendication **7**, caractérisé en ce que la face interne du support (**2**) est adaptée pour assurer une fonction d'anti-reflets, de façon à réduire les réflexions parasites.

10. Capteur selon la revendication 7, caractérisé en ce que la face d'entrée (**6**) de la lentille est revêtue d'une couche anti-reflets.

11. Capteur selon la revendication 7, caractérisé en ce que le support opaque (**2**) est réalisée par injection, à l'intérieur duquel est également réalisée, par injection, la lentille (**5**).

**Patentansprüche**

1. Optoelektronischer Sensor zur Messung der Intensität und der Einfallsrichtung eines Lichtbündels (1) mit einer Matrix (10) aus Pixeln (12), die jeweils über eine photosensible Zelle (11) verfügen und im wesentlichen in einer Ebene angeordnet sind, um eine künstliche Retina zu bilden, sowie einem optischen System (3), das so gebaut ist, dass ein Lichtpunkt (4) auf der Pixelmatrix (10) gebildet wird, und aus einer Vorrichtung (14) zur Verarbeitung der durch die Pixel unter der Einwirkung des Lichtbündels gelieferten Signale, die ihrerseits Mittel zur Bestimmung des geometrischen Zentrums des Lichtpunktes (4) auf der Matrix (10) aufweist, dessen Position von der Einfallsrichtung des Lichtbündels abhängt, und die über Mittel zur Bestimmung der Intensität des Lichtbündels verfügt,
dadurch gekennzeichnet, dass die Mittel zur Bestimmung des geometrischen Zentrums des Lichtpunktes durch ein doppeltes Raster ($R_1$, $R_2$) gebildet werden, das die Pixel (12) der Matrix (10) im wesentlichen in konzentrischen Kreisen und strahlenförmig verbindet, wobei die Koordinaten des Lichtpunktes auf der Matrix (10) den Azimut ($\underline{a}$) und den Höhenwinkel ($\underline{h}$) des einfallenden Lichtbündels abbilden, sowie durch die Schaltkreise (16, 17), die den beiden die Pixel (12) verbindenden Rastern so zugeordnet sind, dass jeweils die Koordinaten des Azimut und des Höhenwinkels des einfallenden Lichtbündels berechnet werden.

2. Sensor nach Anspruch 1,
dadurch gekennzeichnet, dass jeder photosensiblen Zelle (11) ein Korrekturfaktor zugewiesen ist, der vom Wert der Reflexionsverluste abhängt, die auf der optischen Oberfläche der Linse (5) auftreten und deren Wert von der Position der Zelle in der Matrix sowie von den Werten der Korrekturfaktoren der dem Lichtpunkt (4) zugehörigen benachbarten Zellen abhängt.

3. Sensor nach Anspruch 1,
dadurch gekennzeichnet, dass die Vorrichtung (14) über Mittel zur Festlegung eines variablen Schwellenwertes für die Signale verfügt, so dass die Zahl der Zellen konstant bleibt, die ein diesen Schwellenwert erreichendes Signal aussenden.

4. Sensor nach Anspruch 1,
dadurch gekennzeichnet, dass die Verarbeitungsvorrichtung (14) Mittel zur Erkennung eins bei diffusem Licht aus der Lichtquelle resultierenden Lichtpunktes (4) umfasst.

**5.** Sensor nach Anspruch 2,
dadurch gekennzeichnet, dass die Korrekturfaktoren in einer Anpassung der aktiven Zelloberfläche und/oder einer Regelung des von der Zelle gelieferten Stroms bestehen.

**6.** Sensor nach Anspruch 1,
dadurch gekennzeichnet, dass das optische System (3) aus einer Linse (5) besteht, die eine Kugelhaube (7) bildet, die der Matrix (10) mit Abstand zu dieser zugewandt ist, so dass sich die Matrix zwischen der Linse und deren Brennebene befindet, sowie aus einer Blende (8), die die Eintrittsöffnung der Linse begrenzt, durch die das einfallende Lichtbündel (1) durchdringt.

**7.** Sensor nach Anspruch 6,
dadurch gekennzeichnet, dass die Blende (8) mittels einer in einem lichtundurchlässigen Träger (2) gearbeiteten Öffnung ausgeführt ist, in der sich die kleine Grundfläche $(5_1)$ eines Kegelstumpfes (52) befindet, der gegenüber der die Kugelhaube (7) tragenden Seite angeordnet ist, wobei die kleine Grundfläche $(5_1)$ des Kegelstumpfes die Eintrittsfläche (6) der Linse bildet.

**8.** Sensor nach Anspruch 7,
dadurch gekennzeichnet, dass die Linse (5) zwischen dem Kegelstumpf (52) und der Kugelhaube (7) einen vorspringenden Mittelteil $(5_3)$ zur Verbindung mit dem lichtundurchlässigen Träger (2) aufweist.

**9.** Sensor nach Anspruch 7,
dadurch gekennzeichnet, dass die Innenseite des Trägers (2) angepasst ist, um eine Antireflexfunktion zur Verminderung von störenden Reflexionen zu gewährleisten.

**10.** Sensor nach Anspruch 7,
dadurch gekennzeichnet, dass die Linseneintrittsfläche (6) mit einem Antireflexbelag beschichtet ist.

**11.** Sensor nach Anspruch 7,
dadurch gekennzeichnet, dass der lichtundurchlässige Träger (2) eingespritzt wird, in den dann die Linse (5) gleichfalls eingespritzt wird.

**Claims**

**1.** An optoelectronic sensor for measuring the intensity and the direction of incidence of a light beam (1), the sensor being of the type comprising:

- a matrix (10) of pixels (12) each including a photosensitive cell (11), the pixels being organized substantially in a plane so as to constitute an artificial retina;
- an optical system (3) designed to form a light spot (4) on the matrix of pixels (10); and
- a signal processor device (14) for processing the signals delivered by the pixels under the effect of a light beam and comprising:

    . means for determining the geometrical center of the light spot (4) on the matrix (10), the position of which is a function of the direction of incidence of the light beam; and
    . means for determining the intensity of the light beam; the sensor being characterized in that the means for determining the geometrical center of the light spot are constituted by:

        - two arrays $(R_1, R_2)$ of connections between the pixels (12) of the matrix (10), said arrays substantially constituting radii and concentric circles, the coordinates of the light spot on the matrix (10) giving an image of the azimuth angle (a) and of the elevation angle (h) of the incident light beam; and
        - circuits (16, 17) associated with the two arrays of connections between pixels (12) respectively for calculating the azimuth coordinate and the elevation coordinate of the incident light beam.

**2.** A sensor according to claim 1, characterized in that each photosensitive cell (11) is associated with a correction factor that depends on the value of reflection losses that appear on the optical surface of the lens (5) and the value of which depends on the position of the cell in the matrix, and also on the values of the correction factors for the adjacent cells belonging to the light spot (4).

**3.** A sensor according to claim 1, characterized in that the device (14) includes means for defining a variable threshold for the signals so that the number of cells delivering a signal and reaching said threshold remains constant.

**4.** A sensor according to claim 1, characterized in that the treatment device (14) includes means for distinguishing between the presence of a light spot (4) obtained from a light source, and of a light spot obtained from diffuse illumination.

**5.** A sensor according to claim 2, characterized in that the correction factors are constituted by matching the active surface area of each cell and/or by a weighting operation applied to the current delivered by each cell.

6. A sensor according to claim 1, characterized in that the optical system (3) is constituted by:

   - a lens (5) having a spherical cap (7) facing towards and situated at a distance from the matrix (10) so that the matrix is placed between the lens and its focal plane; and
   - a diaphragm (8) limiting the inlet aperture of the lens through which the incident light beam (1) passes.

7. A sensor according to claim 6, characterized in that the diaphragm (8) is made by means of a hole formed through an opaque support (2) and occupied by the small base $(5_1)$ of a truncated cone $(5_2)$ formed on the face of the lens opposite from that carrying the spherical cap (7), the small base $(5_1)$ of the truncated cone forming the inlet face (6) of the lens.

8. A sensor according to claim 7, characterized in that the lens (5) includes, between the truncated cone $(5_2)$ and the spherical cap (7), a middle portion $(5_3)$ that projects outwards and is connected to the opaque support (2).

9. A sensor according to claim 7, characterized in that the inside face of the support (2) is adapted to perform an antireflection function, so as to reduce parasitic reflections.

10. A sensor according to claim 7, characterized in that the inlet face (6) of the lens is provided with an antireflection layer.

11. A sensor according to claim 7, characterized in that the opaque support (2) is made by injection, and the lens (5) is likewise made by injection inside the opaque support.

# FIG.1

# FIG.2

# FIG.8

FIG.3

FIG.4

FIG.6

P1 P2 P3   Pi-2 Pi-1 Pi Pi+1 Pi+2   PN-1 PN   11

14

15

R1

Va

R2   16

Vh

Ii  17

18

R

Vi

## FIG. 5

## FIG. 7